# EUROPÄISCHE PATENTSCHRIFT

(11) **EP 2 129 564 B1**
(45) Veröffentlichungstag und Bekanntmachung des Hinweises auf die Patenterteilung: **01.06.2011**
(21) Anmeldenummer: 08734595.5
(22) Anmeldetag: 10.03.2008
(51) Int. Cl.: B60T 13/74, B62D 5/04

(54) **ELEKTROMECHANISCHES SYSTEM UND VERFAHREN ZUM BETREIBEN EINES ELEKTROMECHANISCHEN SYSTEMS**
ELECTROMECHANICAL SYSTEM AND METHOD FOR OPERATING AN ELECTROMECHANICAL SYSTEM
SYSTÈME ÉLECTROMÉCANIQUE ET PROCÉDÉ PERMETTANT DE FAIRE FONCTIONNER UN SYSTÈME ÉLECTROMÉCANIQUE

(30) Priorität: 26.03.2007 DE 102007014345
(43) Veröffentlichungstag der Anmeldung: 09.12.2009
(73) Patentinhaber: Volkswagen Aktiengesellschaft, 38436 Wolfsburg (DE)
(72) Erfinder: KILZ, Sebastian, 38118 Braunschweig (DE); BARTELS, Alexander, 38114 Braunschweig (DE)
(86) Internationale Anmeldenummer: PCT/EP2008/001875
(87) Internationale Veröffentlichungsnummer: WO 2008/116554

(56) Entgegenhaltungen:
- EP-A- 1 081 359
- EP-A- 1 407 951
- DE-A1- 19 929 932
- JP-A- 59 188 050
- JP-A- 2004 352 090

## Beschreibung

Die Erfindung betrifft ein elektromechanisches System und ein Verfahren zum Betreiben eines elektromechanischen Systems sowie ein Kraftfahrzeug mit einem elektromechanischen System.

Elektromechanische Systeme sind für vielfältige Anwendungsgebiete bekannt. Insbesondere in der Kraftfahrzeugtechnik werden zunehmend rein mechanische Systeme durch elektromechanische Systeme ersetzt. Beispiele hierfür sind elektromechanische Lenkungen oder auch elektromechanische Bremsen. Gemeinsam ist diesen Systemen, dass mittels eines Elektromotors ein mechanisches Element bewegt wird. Dabei kann die Bewegung des mechanischen Elements ausschließlich oder nur ergänzend über den Elektromotor erfolgen. Aufgrund der Tatsache, dass die elektromechanischen Systeme häufig oder ausschließlich im Freien eingesetzt werden, sind diese sich ändernden Umgebungsbedingungen ausgesetzt.

Aus der EP 1 081 359 A1 ist ein elektromechanisches System in Form einer elektronischen Drosselklappenverstelleinheit bekannt, umfassend mindestens einen Elektromotor und mindestens ein mechanisches Element, das von dem Elektromotor bewegt wird, wobei das elektromechanische System mindestens ein Mittel umfasst, mittels dessen ein Einfrieren einer in das elektromechanische System eingetretenen Flüssigkeit erfasst wird, wobei der Elektromotor zyklisch in wechselnder Richtung bestromt wird.

Der Erfindung liegt daher das technische Problem zugrunde, ein alternatives elektromechanisches System sowie ein Verfahren zum Betreiben eines elektromechanischen Systems zu schaffen, mittels derer die Zuverlässigkeit bzw. Betriebssleherheit in einem Kraftfahrzeug erhöht wird. Weiterhin liegt der Erfindung auch das technische Problem zugrunde, die Zuverlässigkeit bzw. Betriebssicherheit eines kraftfahrzeugs mit einem derartigen elektromechanischen Systems zu erhöhen.

Die Lösung des technischen Problems ergibt sich durch die Gegenstände mit den Merkmalen der Patentansprüche 1, 9 und 10. Weitere vorteilhafte Ausgestaltungen der Erfindung ergeben sich aus den Unteransprüchen.

Hierzu umfasst das elektromechanische System mindestens einen Elektromotor und mindestens ein mechanisches Element, das von dem Elektromotor bewegt wird, wobei das elektromechanische System mindestens ein Mittel umfasst, mittels dessen ein Einfrieren einer Betriebsflüssigkeit und/oder einer in das elektromechanische System eingetretenen Flüssigkeit, insbesondere Wasser erfasst wird, wobei der Elektromotor zyklisch in wechselnde Richtung bestromt wird, um ein Einfrieren zu verhindern oder zu verzögern. Der Erfindung liegt dabei die Erkenntnis zugrunde, dass bei niedrigen Außentemperaturen bei flüssigkeitsgefüllten elektromechanischen Systemen die Flüssigkeit einfrieren kann, was zu einer Blockierung des Systems führt. Beeinträchtigungen sind auch bei einer Verdickung der Flüssigkeit zu erwarten, so dass es sinnvoll ist, auch die Gefahr eines Einfrierens oder Verdickens zu erfassen bzw. aus den Mess- oder Betriebsdaten abzuleiten. Sofern bekannt ist, bei welcher Temperatur oder bei welchem Betriebszustand mit dem Einfrieren oder der Gefahr des Einfrierens gerechnet werden kann, kann beispielsweise die Bestromung des Elektromotors auch ab bzw. unter einem Schwellwert für eine Temperatur vorgenommen werden. Das Einfrieren des elektromechanischen Systems oder einer seiner den Betrieb beeinflussenden Flüssigkeiten kann zu erheblichen Folgeschäden oder zur Beeinträchtigung der Funktion des elektromechanischen Systems führen. Durch die zyklische Bestromung mit wechselnder Richtung wird die Verdickung oder Eis- oder Eiskristallbildung bzw. das Verfestigen der entsprechenden Flüssigkeiten (Betriebsflüssigkeiten oder in das System eindringende Flüssigkeiten) verhindert und durch die Bewegung kleinere Verbindungen aufgebrochen. Durch die zyklische Bewegung werden die entsprechenden Flüssigkeiten in dem elektromechanischen System zusätzlich durchmischt und Temperaturgradienten im System reduziert. Mit anderen Worten ausgedrückt werden Betriebs-oder in das System eindringende Flüssigkeiten an einfriergefährdeten Stellen kontinuierlich in Bewegung gehalten oder Kdurchmischt. Gleichzeitig wird durch auftretende Relbungsverluste das System erwärmt und somit insgesamt dem Einfrieren entgegengewirkt. Dabei ist das elektromechanische System als elektromechanische Lenkung in einem Kraftfahrzeug ausgebildet.

In einer bevorzugten Ausführungsform ist das Mittel zum Erfassen des Einfrierens ein Temperatursensor, Feuchtesensor und/oder ein Stick-Slip-Erkenner.

Der Stick-Slip-Effekt bezeichnet das Ruckgleiten von gegeneinander bewegten Festkörpern. Dabei üben gedämpft gekoppelte Oberflächenteile eine schnelle Bewegungsfolge aus Haften, Verspannen, Trennen und Abgleiten aus. Dies führt je nach System zur Anregung von schwingungen, die von einer resonanzfähigen Oberfläche beispielsweise als Geräusch abgestrahlt werden können. Ein elektromechanisches System könnte somit unter anderem einen höheren Geräuschpegel aufweisen. Beispiele hierfür sind das Quietschen von Eisen- oder Straßenbahn bei Kurvenfahrt oder Bremsmanövern, ratternde Scheibenwischer auf Autoscheiben oder auch das "Knarzen" von Lederschuhen. Bei einem Kraftfahrzeug mit einem erfindungsgemäßen elektromechanischen System ist somit bei Auftreten des Stick-Slip-Effekts in einem elektromechanischen System zumindest mit unerwünschten Komforteinbussen einschließlich Erhöhung des Geräuschpegels im Betrieb zu rechnen. Bei einer zunehmenden Erhöhung des Haftanteils (Stick-Anteils) kann es sogar im ungünstigsten Fall zu einer Funktionsbeeinträchtigung kommen.

Mittels eines Temperatursensors lässt sich einfach bei Kenntnis des Gefrierpunkts der Betriebsflüssigkeit oder der Kenntnis des Gefriepunkts einer möglicherweise eingedrungenen Flüssigkeit abschätzen, ob die Gefahr des Einfrierens der jeweiligen Flüssigkeit gegeben ist. Im Fall, dass das elektromechanische System in einem Kraftfahrzeug eingebaut ist, ist aufgrund der Betriebsumgebung in der Regel mit einem möglichen Eindringen von Wasser zu rechnen. Mit einem Feuchtesensor kann das Eindringen von Flüssigkeit in einen sonst trockenen Betriebsraum detektiert werden. Alternativ oder kumulativ kann dies auch mittels eines Stick-Slip-Erkenners erfolgen, der die Betriebsdaten des elektromechanischen Systems auswertet. Der Grundgedanke bei der Stick-Slip-Erkennung ist, dass bei einem beginnenden Einfrieren oder bei einer beginnenden Verdickung trotz Kraft bzw. Moment des Elektromotors das mechanische Element sich (zunächst) nicht bewegt (Stick-Effekt) und dann anschließend beim Losbrechen der Beginn der Bewegung im Bereich des Maximums der aufgebrachten Kraft von einer Verringerung der notwendigen Kraft zur Wegregelung folgt. Vorzugsweise wird nicht bei einem einmaligen Stick-Slip-Effekt auf ein Einfrieren geschlossen; sondern erst wenn dieser Effekt mehrere Male hintereinander auftritt, vorzugsweise innerhalb eines definierten oder definierbaren Zeitintervalls.

Ist das Mittel zur Erkennung des Einfrierens oder der Gefahr des Einfrierens oder der Gefahr der Verdickung der Betriebsflüssigkeit als Stromsensor für den Elektromotor oder als Kraft- oder Drehmomentsensor des elektromechanischen Systems ausgebildet, so kann durch Schwankung des jeweiligen Signals auf das Auftreten des Slip-Stick-Effekts geschlossen werden. Im Falle des Stromsignals würden in gewissen Abständen Stromspitzen im Signalverlauf auftreten. Der zeitliche Verlauf der Stromspitzen ist abhängig von dem jeweiligen elektromechanischen System und typisch im Auftreten von Amplitude und Signaldauer.Ein Stromsensor kann diesen Verlauf mit entsprechender Auflösungsmöglichkeit detektieren. Die Stromspitzen sind dabei auf die Überwindung von kurzzeitigen Kraftspitzen zurückzuführen. Zur einfacheren Detektion kann das Stromsignal noch in einer Recheneinrichtung einer Fourier-Analyse unterzogen werden, wobei durch das Auftreten bestimmter Frequenzanteile im Frequenzspektrum auf den Stick-Slip-Effekt geschlossen wird. Für den Einsatz von Kraft- und Drehmomentsensoren, die die Lenkkraft bzw. das aufzubringende Drehmoment an der Lenkung messen, gilt ein analoger Ansatz in dem entsprechenden Signal zur Detektion des Effekts.

In einer weiteren bevorzugten Ausführungsform ist das zyklische Stromsignal rechteckförmig, trapezförmig, sinusförmig oder dreieckförmig ausgebildet, wobei das Stromsignal vorzugsweise einen Mittelwert von Null aufweist, also Kraft-Offset-Frei ist, d.h. das zyklische Stromsignal bewirkt im Mittel keine zusätzliche resultierende Kraft am Elektromotor. Umfasst sein sollen auch Signalformen, die im wesentlichen oder auch abschnittsweise im wesentlichen den oben genannten Zeitverlauf aufweisen. In realen Schaltungen werden die Signalformen abhängig vom jeweiligen Schaltungsaufbau durch parasitäre Schaltungselemente, wie beispielsweise parasitäre Induktivitäten, Kapazitäten und ohmsche Widerstände verformt, so dass abhnängig vom Messort in der Schaltung ein entsprechend verformtes Signal anzutreffen ist. Besonders bevorzugt ist das rechteckförmige Stromsignal, da dies eine schnelle Kraftumkehr bewirkt und einfach gebildet werden kann.

Eine weitere Möglichkeit zur Aufschaltung eines überlagerten Stromes besteht darin, dass eine Spannungsquelle auf die jeweilige Wicklung des Elektromotors des elektromechanischen Systems, beispielsweise mittels MOS-FETs (Metal Oxide Semiconductor Field Effect Transistor) oder IGBTs (Insulated Gate Bipolar Transistor), geschaltet wird. Der dazugehörige Strom stellt sich dann aufgrund der vorliegenden Impedanz der jeweiligen Wicklung ein.

In einer weiteren bevorzugten Ausführungsform wird die Frequenz des zyklischen Stromsignals größer 20 Hz gewählt, insbesondere größer 30 Hz und weiter vorzugsweise größer 40 Hz. Die Frequenz wird dabei vorzugsweise derart gewählt, dass die Beeinträchtigung für einen Nutzer bzw. den Betriebslauf des elektromechanischen Systems gering ist. Dieses kann abhängig von dem Betriebszustand des elektromechanischen Systems oder den Bedingungen des Betriebs, insbesondere der Temperatur des elektromechanischen Systems oder der Temperatur, in dem das elektromechanische System betrieben wird, erfolgen. Gleiches gilt für die geeignete Wahl der Amplitude des Stromsignals. Allerdings kann die Frequenz und die Amplitude auch derart - gewählt werden, dass eine akustische und/oder haptische Spürbarkeit für den Nutzer gegeben ist, so dass dieser gewarnt wird. Frequenz, Amplitude und Warnintervalle können betriebsabhängig gewählt werden. Die Warnung kann auch über eine zusätzliche Warneinrichtung erfolgen.

In einer weiteren bevorzugten Ausführungsform wird das zyklische Stromsignal dem Betriebsstromsignal überlagert, d.h. das "Freirütteln" findet während des normalen Betriebes statt. Es sind jedoch auch Anwendungen denkbar, in denen das zyklische Bestromen auf Ruhezustände des elektromechanischen Systems beschränkt bzw. erweitert wird.

Die Erfindung wird nachfolgend anhand eines bevorzugten Ausführungsbeispieles näher erläutert. Die Fig. zeigen:
Fig. 1. ein schematisches Blockschaltbitd eines elektromechanischen Systems und
Fig. 2. eine Darstellung der Momente bzw. Ritzelwinkel einer elektromechanischen Lenkung bei einem Einfriervorgang.

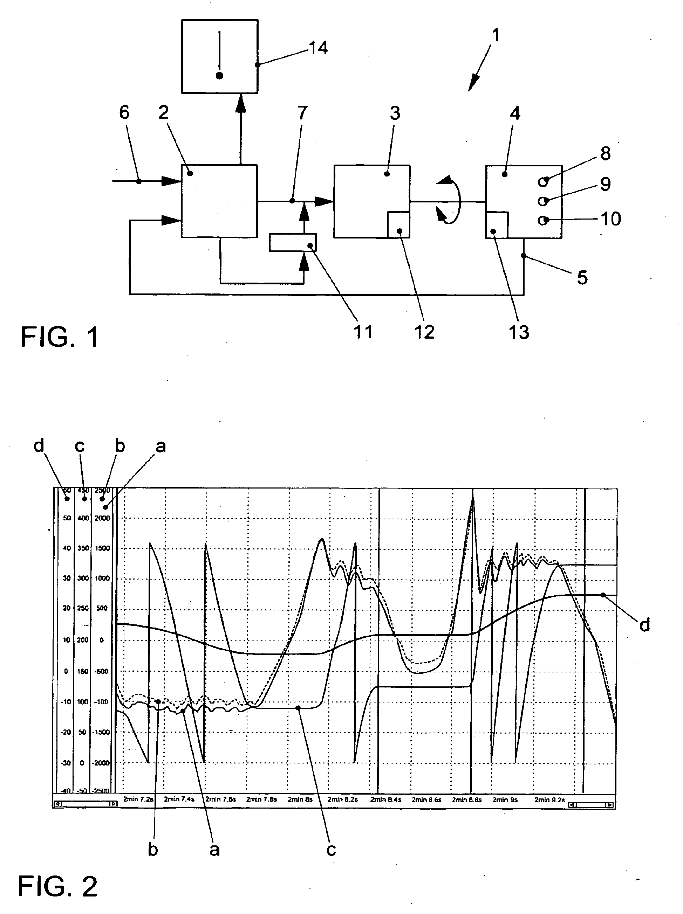

In der Fig. 1 ist schematisch ein elektromechanisches System 1 dargestellt. Das elektromechanische System 1 umfasst ein Steuergerät 2, einen Elektromotor 3 und ein mechanisches Element 4, das von dem Elektromotors 3 bewegt wird. Über einen alternativen Stromsensor 11 wird ein Betriebsstrom 7 des Elektromotors 3 erfasst. Weiterhin optional vorhanden sind ein Kraftsensor 12 und/oder ein Drehmomentsensor 13, mit denen eine Variation aufzubringender Kräfte oder Dehmomente messbar sind. Weiterhin wird die istPosition 5 des mechanischen Elementes 4 dem Steuergerät 2 übermittelt. Des Weiteren erhält das Steuergerät 2 eine Eingangsgröße 6, beispielsweise ein Motorsollmoment. Aus der Eingangsgröße 6 berechnet das Steuergerät 2 ein Betriebsstrom 7, mit dem der Elektromotor 3 bestromt wird, um das gewünschte Motormoment zu erzeugen. Weist nun das mechanische Element 4 eine Betriebsflüssigkeit auf oder befindet sich eine eingetretene Flüssigkeit wie beispielsweise Wasser im Bereich des mechanischen Elementes, so besteht die Gefahr des Einfrierens. Um nun die Gefahr des Einfrierens oder die Gefahr des Verdickens zu erkennen, ist in dem Steuergerät 2 eine Einfriererkennung oder eine Erkennung der Verdickung einer Betriebsflüssigkeit oder einer in das elektromechanische Systeme eingedrungenen Flüssigkeit integriert. Die Einfriererkennung basiert auf der Tatsache, dass bei der Bewegung von einfrierenden flüssigkeitsgefüllten elektromechanischen Systemen charakteristische Effekte auftreten. Ursache ist eine allmähliche Eiskristallbildung in der Flüssigkeit (bzw. eine Kristallbildung, sofern es sich bei der Flüssigkeit nicht um Wasser handelt) oder eine Verklumpung, die deren Viskosität verändert. Dadurch kommt es zu ausgeprägten Stick-Slip-Effekten bei Einleitung von Bewegungen, wobei die Erkennung vorzugsweise für weggeregelte Systeme wie beispielsweise eine elektromechanische Lenkung geeignet ist. Als geeignete Mittel zur Erkennung der Gefahr des Verdickens oder des Einfrierens einer Betriebsflüssigkeit oder einer in das elektromechanische System, eingedrungenen Flüssigkeit können ein Temperatursensor 8 und/oder ein Feuchtesensor 9 und oder ein Stick-Slip-Erkenner 10 dienen. Ein Stick-Slip-Erkenner 10 ist ein geeignetes Mittel zum Erkennen des Stick-Slip-Effektes, beispielsweise durch Aufnahme von Geräuschen bzw von Körperschall des elektromechanischen Systems und durch anschließende Frequenzanalyse des Geräusch- oder Körperschallsignals und durch nachfolgenden Vergleich mit einem Sollwertsignal oder einem zugehörigen Schwellwert für bestimmte Frequenzen. Die Erkennung erfolgt bei Durchschreitung des Schwellwertsignals bzw. bei ausreichender Abweichung vom Sollwertsignal.

Die notwendigen Kräfte zur Erkennung des Slip-Stick-Effektes sind systemabhängig, liegen aber weit über den üblichen Kräften zur Überwindung der Gesamtreibung des Systems. Aufgrund der Komplexität des zu erkennenden Effektes besteht die Umsetzung der Einfriererkennung aus zwei Teilen:
1) Die Stick-Erkennung, d.h. die Erkennung von stillstehenden Systemen bei ansteigender Kraft (Überwindung der Kraftreibung)
2) Die Slip-Erkennung, d.h. Beginn der Bewegung im Bereich des Maximus der aufgebrachten Kraft gefolgt von einer Verringerung der notwendigen Kraft zur Wegregelung (Überwindung der Gleitreibung)

Diese beiden Teile sollten mehrfach direkt aufeinander folgen, um ein Stick-Slip-Effekt sicher zu erkennen. Mehrere solcher Stick-Slip-Effekte innerhalb einer definierten oder definierbaren Zeitspanne weisen dann auf ein einfrierendes System hin.

Hat nun das Steuergerät 2 eine solche Situation erfasst, so wird ein zusätzliches, zyklisches Stromsignal gebildet, dessen Vorzeichen zyklisch wechselt und dessen zeitlicher Mittelwert vorzugsweise Null ist. Dieses zusätzliche Stromsignal wird dann auf den Betriebsstrom 7 aufaddiert. Die Frequenz und die Amplitude werden dabei derart gewählt, dass das Betriebsverhalten sich nicht ändert, aber durch die zyklischen Bewegungen der Eiskristallbildung entgegengewirkt wird. Vorzugsweise soll jedoch insbesondere bei von Nutzern geführten elektromechanischen Systemen, wie beispielsweise einer elektromechanischen Lenkung in einem Kraftfahrzeug der Nutzer die Gefahr mitgeteilt bekommen. Dies kann durch geeignete Wahl der Frequenz und/oder Amplitude erfolgen, die dann besonders vorteilhaft gleichzeitig ein optisches und/oder-haptisches und/oder akustisches Warnsignal an einer Warneinrichtung 14 für den Nutzer erzeugen. Die Aufsummierung erfolgt in einem Ausführungsbeispiel im Falle einer Elektromechanischen Lenkung vorzugsweise im Stillstand der elektromechanischen Lenkung und in einem weiteren Ausführungsbeispiel zusätzlich im Leerlaufzustand eines Kraftfahrzeuges. Im Leerlauf, sofern es sich gleichzeitig um einen Fahrzeugstillstand handelt, hat die zyklische Bestromung den Vorteil, dass die Fahrtrichtung nicht beeinflusst wird.

In der Fig. 2 sind beispielhafte Verläufe für das Handmoment (Verlauf a), das Motorsollmoment (Verlauf b), dem Motorwinkel (Verlauf c) bzw. den Ritzelwinkel (Verlauf d) bei einer elektromechanischen Lenkung dargestellt. Üblicherweise folgt der Ritzelwinkel dem Motorsollmoment. Zum Zeitpunkt "2 min., 7,8 s" steigt jedoch das Handmoment und damit auch das Motorsollmoment an, jedoch ändert sich nicht der Ritzelwinkel. Gleiches gilt für den Motorwinkel, der dem Ritzelwinkel folgt. Der sägezahnartige Verlauf des Motorwinkels beruht dabei auf der Tatsache, dass dieser die Motorlage wiedergibt und somit mit jeder Umdrehung bei 0° begrenzt wurde.

Das Handmoment steigt dann immer weiter bis zum Zeitpunkt "2 min., 8,1 s", wo in etwa das Handmoment sein Maximum aufweist (Stick-Phase). Anschließend steigt der Motorwinkel steil an und auch der Ritzelwinkel steigt, wohingegen das Handmoment aber auch das Motorsollmoment zunächst absinken. Der Gradient vom Motorsollmoment bzw. Handmoment hat dabei ein anderes Vorzeichen als der Gradient des Ritzelwinkels (Slip-Phase). Der Zeitpunkt "2 min., 8,2 s" stellt das Ende der Stick-Slip-Phase dar. Dieser Vorgang tritt anschließend nochmals auf (2 min., 8,8 s). Diese lokalen Maxima des Handmoments bei Einsetzen der Bewegung sind auf die Tätigkeit des Fahrers zurückzuführen, der das plötzliche Losbrechen nicht schnell genug kompensieren kann.

## Patentansprüche

1. Elektromechanisches System (1), umfassend mindestens einen Elektromotor (3) und mindestens ein mechanisches Element (4), das von dem Elektromotor (3) bewegt wird, wobei das elektromechanische System (1) mindestens ein Mittel umfasst, mittels dessen ein Einfrieren einer Betriebsflüssigkeit und/oder einer in das elektromechanische System (1) eingetretenen Flüssigkeit erfasst wird, wobei der Elektromotor (3) zyklisch in wechselnder Richtung bestromt wird,
**dadurch gekennzeichnet, dass**
das elektromechanische System (1) als elektromechanische Lenkung in einem Kraftfahrzeug ausgebildet ist.

2. Elektromechanisches System nach Anspruch 1, **dadurch gekennzeichnet, dass** das Mittel als Temperatursensor (8) und/oder Feuchtesensor (9) und/oder als Stick-Slip-Erkenner (10) ausgebildet ist.

3. Elektromechanisches System nach Anspruch 1, **dadurch gekennzeichnet, dass** das Mittel als Stromsensor (11) für den Elektromotor (3), Kraft- (12) oder Drehmomentsensor (13) des elektromechanischen Systems (1) ausgebildet ist.

4. Elektromechanisches System nach einem der vorangegangenen Ansprüche, **dadurch gekennzeichnet, dass** das zyklische Stromsignal für den Elektromotor (3) jeweils im Wesentlichen rechteckförmig, trapezförmig, sinusförmig oder dreieckförmig ausgebildet ist.

5. Elektromechanisches System nach einem der vorangegangenen Ansprüche, **dadurch gekennzeichnet, dass** die Frequenz des zyklischen Stromsignals mehr als 20 Hz beträgt.

6. Elektromechanisches System nach einem der vorangegangenen Ansprüche, **dadurch gekennzeichnet, dass** das zyklische Stromsignal dem Betriebsstromsignal (7) des Elektromotors (3) überlagert wird.

7. Elektromechanisches System nach einem der vorangegangenen Ansprüche, **dadurch gekennzeichnet, dass** das Einfrieren einer Betriebsflüssigkeit oder einer in das elektromechanische System (1) eingetretenen Flüssigkeit die Verdickung der Betriebsflüssigkeit oder die Gefahr der Verdickung einer in das elektromechanische System (1) eingetretenen Flüssigkeit umfasst.

8. Elektromechanisches System nach einem der vorangegangenen Ansprüche, **dadurch gekennzeichnet, dass** das Einfrieren einer Betriebsflüssigkeit oder einer in das elektromechanische System (1) eingetretenen Flüssigkeit die Gefahr eines Einfrierens der Betriebsflüssigkeit oder die Gefahr des Einfrierens einer in das elektromechanische System (1) eingetretenen Flüssigkeit umfasst.

9. Kraftfahrzeug mit einem elektromechanischen System, umfassend mindestens einen Elektromotor und mindestens ein mechanisches Element (4), das von dem Elektromotor (3) bewegbar ist oder bewegt wird, das elektromechanische System (1) mindestens ein Mittel umfasst, mittels dessen die Gefahr eines Einfrierens oder die Verdickung einer den Betrieb des elektromechanischen Systems beeinflussenden Flüssigkeit erfasst wird und bei Gefahr des Einfrierens oder bei Verdickung oder bei Gefahr der Verdickung der Flüssigkeit der Elektromotor (3) zyklisch in wechselnder Richtung bestromt wird, **dadurch gekennzeichnet, dass** das elektromechanische System (1) als elektromechanische Lenkung ausgebildet ist.

10. Verfahren zum Betreiben eines elektromechanischen Systems (1), mittels mindestens einem Elektromotor (3), mindestens einem mechanischen Element (4), das von dem Elektromotor (3) bewegt wird, und mindestens einem Mittel zur Erfassung des Einfrierens einer Betriebsflüssigkeit und/oder einer in das elektromechanische System (1) eingetretenen Flüssigkeit, wobei der Elektromotor (3) zyklisch in wechselnder Richtung bestromt wird, falls das Mittel die Gefahr des Einfrierens erkannt hat, **dadurch gekennzeichnet, dass** das elektromechanische System (1) als elektromechanische Lenkung ausgebildet wird.

11. Verfahren nach Anspruch 10, **dadurch gekennzeichnet, dass** das Mittel als Temperatursensor (8) oder als Feuchtesensor (9) und/oder Stick-Slip-Erkenner (10) ausgebildet ist.

12. Verfahren nach Anspruch 10 oder 11, **dadurch gekennzeichnet, dass** das zyklische Stromsignal für den Elektromotor (3) jeweils im Wesentlichen rechteckförmig, trapezförmig, sinusförmig oder dreieckförmig ausgebildet ist.

13. Verfahren nach einem der Ansprüche 10 bis 12, **dadurch gekennzeichnet, dass** das zyklische Stromsignal für den Elektromotor (3) zumindest jeweils abschnittsweise annähernd rechteckförmig, trapezförmig, sinusförmig oder dreieckförmig ausgebildet ist.

14. Verfahren nach einem der Ansprüche 10 bis 13, **dadurch gekennzeichnet, dass** die Frequenz des zyklischen Stromsignals größer 20 Hz gewählt wird.

15. Verfahren nach einem der Ansprüche 10 bis 14, **dadurch gekennzeichnet, dass** die Frequenz und/oder Amplitude des zyklischen Stroms in Abhängigkeit des Betriebszustands des elektromechanischen Systems (1) öder in Abhängigkeit des Betriebszustands eines Kraftfahrzeugs mit dem elektromechanischen System (1) gewählt wird.

16. Verfahren nach einem der Ansprüche 10 bis 15, **dadurch gekennzeichnet, dass** das zyklische Stromsignal einem Betriebsstromsignal (7) überlagert wird.

17. Verfahren nach einem der Ansprüche 10 bis 15, **dadurch gekennzeichnet, dass** die Bestromung des Elektromtoros (3) in Ruhephasen des elektromechanisahen Systems (1) vorgenommen wird.

## Claims

1. Electromechanical system (1) comprising at least one electric motor (3) and at least one mechanical element (4) which is moved by the electric motor (3), wherein the electromechanical system (1) comprises at least one means by means of which freezing of an operating liquid and/or of a liquid which has entered the electromechanical system (1) is detected, wherein the electric motor (3) is supplied with power cyclically in an alternating direction, **characterized in that** the electromechanical system (1) is.in the form of an electromechanical steering system in a motor vehicle.

2. Electromechanical system according to Claim 1, **characterized in that** the means is in the form of a temperature sensor (8) and/or a moisture sensor (9) and/or in the form of a stick-slip identification device (10).

3. Electromechanical system according to Claim 1, **characterized in that** the means is in the form of a current sensor (11) for the electric motor (3) or a force sensor (12) or a torque sensor (13) of the electromechanical system (1).

4. Electromechanical system according to one of the preceding claims, **characterized in that** the cyclical current signal for the electric motor (3) is in each case substantially rectangular, trapezoidal, sinusoidal or triangular.

5. Electromechanical system according to one of the preceding claims, **characterized in that** the frequency of the cyclical current signal is more than 20 Hz.

6. Electromechanical system according to one of the preceding claims, **characterized in that** the cyclical current signal is superimposed on the operating current signal (7) of the electric motor (3).

7. Electromechanical system according to one of the preceding claims, **characterized in that** freezing of an operating liquid or of a liquid which has entered the electromechanical system (1) involves thickening of the operating liquid or the risk of thickening of a liquid which has entered the electromechanical system (1).

8. Electromechanical system according to one of the preceding claims, **characterized in that** freezing of an operating liquid or of a liquid which has entered the electromechanical system (1) involves the risk of freezing of the operating liquid or the risk of freezing of a liquid which has entered the electromechanical system (1).

9. Motor vehicle having an electromechanical system comprising at least one electric motor and at least one mechanical element (4) which can be moved or is moved by the electric motor (3), wherein the electromechanical system (1) comprises at least one means by means of which the risk of freezing or thickening of a liquid which influences the operation of the electromechanical system is detected, and the electric motor (3) is supplied with power cyclically in an alternating direction in the event of the risk of freezing or in the event of thickening or in the event of the risk of thickening of the liquid, **characterized in that** the electromechanical system (1) is in the form of an electromechanical steering system.

10. Method for operating an electromechanical system (1) by means of at least one electric motor (3), at least one mechanical element (4) which is moved by the electric motor (3), and at least one means for detecting freezing of an operating liquid and/or of a liquid which has entered the electromechanical system (1), wherein the electric motor (3) is supplied with power cyclically in an alternating direction if the means has identified the risk of freezing, **characterized in that** the electromechanical system (1) is in the form of an electromechanical steering system.

11. Method according to Claim 10, **characterized in that** the means is in the form of a temperature sensor (8) or in the form of a moisture sensor (9) and/or a stick-slip identification device (10).

12. Method according to Claim 10 or 11, **characterized in that** the cyclical current signal for the electric motor (3) is in each case substantially rectangular, trapezoidal, sinusoidal or triangular.

13. Method according to one of Claims 10 to 12, **characterized in that** the cyclical current signal for the electric motor (3) is at least in each case approximately rectangular, trapezoidal, sinusoidal or triangular in sections.

14. Method according to one of Claims' 10 to 13, **characterized in that** the frequency of the cyclical current signal is chosen to be greater than 20 Hz.

15. Method according to one of Claims 10 to 14, **characterized in that** the frequency and/or amplitude of the cyclical current is chosen as a function of the operating state of the electromechanical system (1) or as a function of the operating state of a motor vehicle having the electromechanical system (1).

16. Method according to one of Claims 10 to 15, **characterized in that** the cyclical current signal is superimposed on an operating current signal (7).

17. Method according to one of Claims 10 to 15, **characterized in that** power is supplied to the electric motor (3) in quiescent phases of the electromechanical system (1).

## Revendications

1. Système électromécanique (1), comprenant au moins un moteur électrique (3) et au moins un élément mécanique (4) mû par le moteur électrique (3), le système électromécanique (1) comprenant au moins un moyen à l'aide duquel une congélation d'un liquide de service et/ou d'un liquide ayant pénétré dans le système électromécanique (1) est détectée, le moteur électrique (3) étant alimenté de façon cyclique dans une direction puis dans l'autre,
**caractérisé en ce que** le système électromécanique (1) prend la forme d'une direction électromécanique dans un véhicule automobile.

2. Système électromécanique selon la revendication 1, **caractérisé en ce .que** le moyen est réalisé sous forme de capteur de température (8) et/ou de capteur d'humidité (9) et/ou de détecteur de mouvement saccadé stick-slip (10).

3. Système électromécanique selon la revendication 1, **caractérisé en ce que** le moyen est réalisé sous forme de capteur de courant (11) pour le moteur électrique (3), sous forme de capteur de force (12) ou de couple (13) du système électromécanique (1).

4. Système électromécanique selon l'une quelconque des revendications précédentes, **caractérisé en ce que** le signal de courant cyclique du moteur électrique (3) prend respectivement pour l'essentiel une forme rectangulaire, trapézoïdale, sinusoïdale ou triangulaire.

5. Système électromécanique selon l'une quelconque des revendications précédentes, **caractérisé en ce que** la fréquence du signal de courant cyclique est de plus de 20 Hz.

6. Système électromécanique selon l'une quelconque des revendications précédentes, **caractérisé en ce que** le signal de courant cyclique est superposé au signal de courant de service (7) du moteur électrique (3).

7. Système électromécanique selon l'une quelconque des revendications précédentes, **caractérisé en ce que** la congélation d'un liquide de service ou d'un liquide ayant pénétré dans le système électromécanique (1) inclut l'épaississement du liquide de service ou le risque d'épaississement d'un liquide ayant pénétré dans le système électromécanique (1).

8. Système électromécanique selon l'une quelconque des revendications précédentes, **caractérisé en ce que** la congélation d'un liquide de service ou d'un liquide ayant pénétré dans le système électromécanique (1) inclut le risque d'une congélation du liquide de service ou le risque de congélation d'un liquide ayant pénétré dans le système électromécanique (1).

9. Véhicule automobile avec un système électromécanique,' comprenant au moins un moteur électrique et au moins un élément mécanique (4) pouvant être mû ou étant mû par le moteur électrique (3), le système électromécanique (1) comprenant au moins un moyen à l'aide duquel le risque de congélation ou d'épaississement d'un liquide influençant le fonctionnement du système électromécanique est détecté et, en cas de risque de congélation ou en cas d'épaississement ou en cas de risque d'épaississement du liquide, le moteur électrique (3) est alimenté en courant de façon cyclique dans une direction puis dans l'autre, **caractérisé en ce que** le système électromécanique (1) est réalisé sous forme de direction électromécanique.

10. Procédé pour faire fonctionner un système électromécanique (1), au moyen d'au moins un moteur électrique (3), d'au moins un élément mécanique (4), qui est mû par le moteur électrique (3), et d'au moins un moyen pour détecter la congélation d'un liquide de service et/ou d'un liquide ayant pénétré dans le système électromécanique (1), le moteur électrique (3) étant alimenté en courant de façon cyclique dans une direction puis dans l'autre, si le moyen a détecté le risque de congélation, **caractérisé en ce que** le système électromécanique (1) est réalisé sous forme de direction électromécanique.

11. Procédé selon la revendication 10, **caractérisé en ce que** le moyen est réalisé sous forme de capteur de température (8) ou sous forme de capteur d'humidité (9) et/ou sous forme de détecteur de mouvement saccadé stick-slip (10).

12. Procédé selon la revendication 10 ou 11, **caractérisé en ce que** le signal de courant cyclique du moteur électrique (3) prend respectivement pour l'essentiel une forme rectangulaire, trapézoïdale, sinusoïdale ou triangulaire.

13. Procédé selon l'une quelconque des revendications 10 à 12, **caractérisé en ce que** le signal de courant cyclique pour le moteur électrique (3) est réalisé au moins à chaque fois en partie sous forme approximativement rectangulaire, trapézoïdale, sinusoïdale ou triangulaire.

14. Procédé selon l'une quelconque des revendications 10 à 13, **caractérisé en ce que** la fréquence du signal de courant cyclique est choisie supérieure à 20 Hz.

15. Procédé selon l'une quelconque des revendications 10 à 14, **caractérisé en ce que** la fréquence et/ou l'amplitude du courant cyclique sont choisies en fonction de l'état de service du système électromécanique (1) ou en fonction de l'état de service d'un véhicule automobile comprenant le système électromécanique (1).

16. Procédé selon l'une quelconque des revendications 10 à 15, **caractérisé en ce que** le signal de courant cyclique est superposé à un signal de courant de service (7).

17. Procédé selon l'une quelconque des revendications 10 à 15, **caractérisé en ce que** l'alimentation en courant du moteur électrique (3) est effectuée dans des phases de repos du système électromécanique (1).
